# EUROPEAN PATENT SPECIFICATION

(11) **EP 2 316 549 B1**
(45) Date of publication and mention of the grant of the patent: **27.06.2012**
(21) Application number: 10169387.7
(22) Date of filing: 13.07.2010
(51) Int. Cl.: B01D 3/00, B01D 3/36, B01D 3/40

(54) **Method and device for removing water from bioethanol by combined adsorption and distillation**
Verfahren und Vorrichtung zur Entfernung von Wasser aus Bioethanol durch kombinierte Adsorption und Destillation
Procédé et appareil pour la séparation de l'eau dans du bioéthanol par adsorption et distillation combinées

(30) Priority: 03.08.2009 LV 090135; 04.08.2009 LV 090138
(43) Date of publication of application: 04.05.2011
(73) Proprietor: Latvijas Lauksaimniecibas Universitäte, Jelgava 3001 (LV)
(72) Inventor: Bremers, Gunars, LV-3001 Jelgava (LV); Blija, Anita, LV-3007 Jelgava (LV); Skele, Arnolds, LV-1050 Riga (LV); Birzietis, Gints, LV-3001 Jelgava (LV); Danilevics, Aleksejs, LV-1079 Riga (LV)
(74) Representative: Fortuna, Aleksandra

(56) References cited:
- EP-A1- 1 920 809
- CA-A- 561 125
- DE-A1-102007 043 998
- GB-A- 2 096 125
- US-A- 2 619 497
- US-A- 2 696 305
- US-A- 2 794 772
- US-A- 5 565 066

## Description

### Technical field

The invention relates to the alcohol industry, in particular, to methods for dehydration of bioethanol.

### Background Art

In bioethanol manufacturing, the alcohol is conventionally released from the water in three stages: distilling of the fermented mash, rectifying of the obtained fermented mash distillate and adsorbing residual water from the rectified alcohol. The proposed invention relates to the final two stages of dehydration - removal of water from the fermented mash distillate.

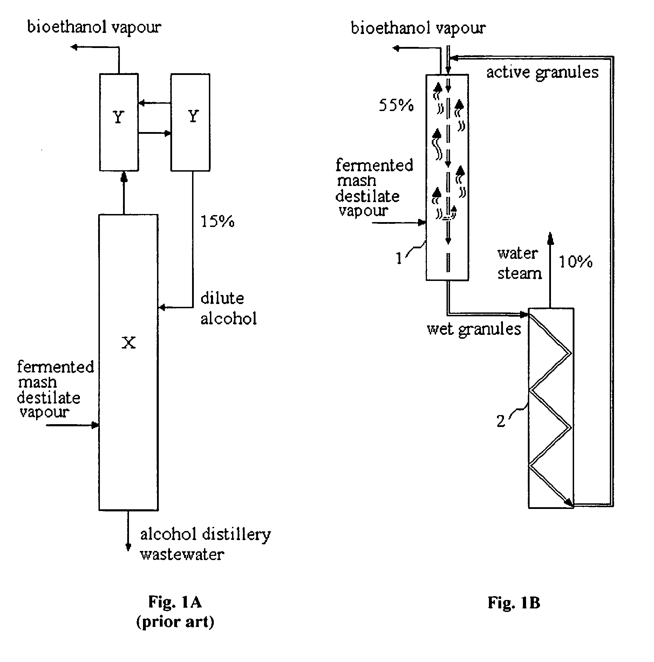

Currently, fermented mash distillate dehydration technology shown in Fig.1A, is mostly used in production of bioethanol, wherein part of water is initially separated by rectifying in traditional rectification columns X, but the residual water is adsorbed by molecular sieves Y (Lyons T.P., Kelsall D.R., Murtagh J.E. (1995) The Alcohol Textbook. Nottingham University Press. 259 p.).

There is known integral dehydration method of bioethanol, wherein both processes - the alcohol rectification and the water adsorption - are performed simultaneously (patent LV 13889, "The method of congruent dehydration of ethanol", published on 20.09.2009). According to this known method, a continuous flow of powdered adsorbent is being fed into upper part of the rectifying column, where it is being mixed with the reflux. The pulp formed flows downwards through rectifying column plates thus adsorbing water from both the liquid and vapour phase. Spent adsorbent is being continuously removed from the bottom of rectifcation column together with the alcohol distillary wastewater in pulp form. The absolute alcohol is being formed on the upper plates, below - the concentration is dropping. There is only the adsorption process at the part of column, where the alcohol concentration is above the azeotropic 97.2% vol. At the lower concentrations occur both, adsorption and rectification. By adsorbent's gradual impregnation with water, dominant of the rectification procedure is intensifying. That major disadvantage of the known method is settling of small adsorbent particles from the liquid pulp on horizontal surfaces of plates. That worsens the conditions of operation of the equipment and requires additional monitoring and cleaning. Another disadvantage of the known method is the complexity of regeneration process of the adsorbent in a liquid pulp.

DE 102007043998 A1 discloses a process and apparatus for distilling mash in a column. The distillate is dehydrated in membranes. DE 102007043998 A1 does not disclose a column with an adsorbent flowing down.

GB 2 096 125 A discloses a process and apparatus for dehydrating a feedstream containing water and ethanol. The dehydration is mage on adsorption filxed beds.

EP 1 920 809 A1 discloses a process and apparatus for dehydrating a mixture made of water and alcohol. The feed is first vaporised and then purified in fixed bed adsorbent .

US 5 565 066 A discloses a process and apparatus for separating a mixture comprising water and isopropyl alcohol. The separation is realized in a column by adsorption. The adsorbent is regenerated by striping with nitrogen. The adsorbent is not moistened by intermediate product from the dehydration process.

US 2 696 305 A discloses an apparatus for treating oil. Purification is realized by an adsorbent in a upper part of the column. Adsorbent is regenerated in the lower part of the column.

US 2 619 497 A discloses a process and apparatus for removing alcohol from a fuel. Separation is realized in a first column. The spent adsorbent is regenerated in a desorber to be reintroduced in the adsorber. The adsorbent is not moistened before introduction.

CA 561125 A discloses a process and apparatus for separating hydrocarbons. Separation is realized by adsorption. Spent adsorbent is regenerated in a desorption step. It is reused in column. A liquid carrier is mixed with the adsorbent before introduction in the adsorber. Part of the adsorbent is mixed with the flux of the adsorber.

### Disclosure of Invention

The aim of the invention is to optimize dehydration of bioethanol by reducing the energy consumption that is needed for dehydration, as well as to simplify the bioethanol dehydration technology and construction of equipment.

The objective is achieved by the proposed method for semi-dry congruent dehydration of bioethanol, which includes rectification of fermented mash distillate and simultaneous water adsorption in pouring or downwards moving moist adsorbent layer by feeding the fermented mash distillate flow and the flow of the adsorbent into rectification and adsorbing block, as well as discharging the spent adsorbent and the adsorbent regeneration in the recovery block for its re-use in dehydration of bioethanol. As an adsorbent the active granule form of adsorbent is used, which by feeding into the rectification and adsorption block, is being moistened with the over-azeotropic concentration of the alcohol solution of the dehydration process intermediate product. Then the moistened adsorbent's influence on fermented mash distillate vapour flow being fed into the rectification and adsorption block is ensured. The water is being separated from used (spent) granules by evaporating it at the granules recovery block. Besides, the dehydration process' intermediate needed for the moistening of adsorbent granules - over-azeotropic concentration of alcohol solution is being removed from the rectification and adsorption block's zone, where the intermediate liquid's alcohol concentration is in the range from 97.5 to 98.5% vol, by filtering the intermediate liquid from the moist adsorbent granules. Part of a steam in this zone is also being condensed for the supplementing of the volume of intermediate liquid.

The applied for implementation of the invention bioethanol semi-dry congruent dehydration principle provides, that water separation from the alcohol takes place simultaneously during water adsorption and rectification, in pouring, downwards moving moist adsorbent granules layer, wherein granules layer is being constantly restored by supplying fresh, active granules on its top. In their downwards flow granules become gradually saturated of water by absorbing it from the alcohol vapour being dehydrated and fed to the middle of the layer. The used, saturated of water granules are being discharged from the bottom layer. In cross-sections of the layer, where the liquid phase alcohol concentration is above the azeotropic 97.2% vol, proceeds only water adsorption. In the cross-sections of the layer, where the liquid phase alcohol concentration is below the azeotropic 97.2% vol, the mass and heat transfer occurs on the moving layer granule surfaces, which ensures also the realization of the rectification process.

The alcohol dehydration process is divided into the following zones in the downstream moving moist adsorbent layer: (i) the top, the alcohol over-azeotrope concentration zone, where only the water adsorption occurs, (ii) the middle, alcohol concentration under-azeotrope zone, where water adsorption continues and the rectification process starts, whereas adsorption dominates at the top of this zone, but in the lower part - rectification, (iii) the bottom, where the adsorbent granules are being separated from the alcohol which is being bound to the outer surface of granules.

### Brief Description of Drawings

Fig. 1A is the prior art fermented mash distillate dehydration technology's block scheme;
Fig. 1B is the proposed bioethanol semi-dry congruent dehydration method and device's block scheme;
Fig. 2 is one of the bioethanol rectification and adsorption block's possible embodiments;
Fig. 3A-3C is one of the adsorbent granules recovery block's embodiments; 3A - Left side view, longitudinal section; 3B - frontal view, longitudinal section; 3C - top view, cross-section;
Fig. 4 illustrates how the semi-dry congruent bioethanol dehydration principle is realized and how the water separation processes impact the increase of total concentration of alcohol in different column's (without plates) cross-sections;
Fig. 5 is a diagram for comparing the specific energy consumption by increasing the alcohol concentration separately for adsorbing of water (D), and separately - by the way of rectification (E).

The proposed method, which is based on the bioethanol congruent dehydration principle, is tested on the laboratory equipment having column size h=700mm, d = 80 mm, in which, irrespective of the small dimensions of the column, the inventors were able to realize the full dehydration cycle of feeding alcohol (diluted) vapour, namely, the absolute alcohol vapour was discharged from the top of the column, but water bound in the adsorbent granules - from the bottom of the column, respectively, the alcohol concentration range in this column was from 0% to 100%.

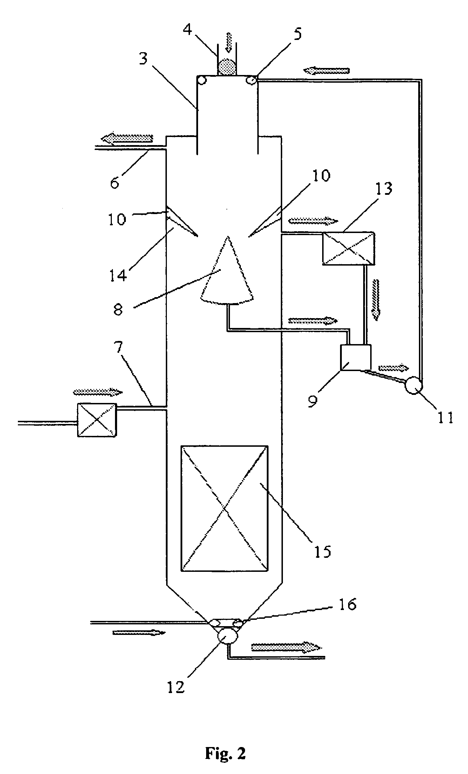

The application of the bioethanol congruent dehydration principle in the manufacturing technology is shown in Fig. 1B. There are two blocks in the scheme - a rectification and adsorption block 1 (that is a rectification column without plates), as well as an adsorbent granules recovery block 2. The block 2 is adapted for drying adsorbent granules discharge from the block 1 and redirecting them into the block 1 for the re-use. The upper part of the block 1 comprise an adsorbent granules moistening cylinder 3 (Fig. 2) with an open bottom part. Upper part of the cylinder 3 is connected to an active adsorbent granules supply 4 with ability to feed the adsorbent granules to the block 1 and is provided with a liquid dispenser 5, which is adapted for splashing adsorbent granules being fed into the cylinder 3 by the alcohol solution.

At the top the block I is equipped with an outlet 6 adapted for discharging the absolute alcohol vapour from it, but at the middle part of the block 1, an inlet 7 for supplying of alcohol to be dehydrated, is connected, the said inlet 7 is adapted for feeding the vapour of alcohol to be dehydrated into the block 1. The middle part of the block 1 means that part of the block 1, in which occurs the alcohol vapour concentration, which corresponds to the dehydrated alcohol vapour concentration. There is a filter 8, which is designed to make it possible to separate the free, flowing down fluid from the adsorbent granules, placed above the level, where the alcohol azeotropic concentration occurs in the block 1. The outlet of the filter 8 is being connected to the liquid dispenser 5 (optionally through a reservoir 9, which is connected to the liquid dispenser 5), with the ability to feed liquid discharged from the filter 8 back to the liquid dispenser 5. A guiding funnel 10 may be placed above the filter 8 in block 1, which ensures guiding of the adsorbent granules and liquid mass to the top of the filter 8. According to one of the embodiments of the invention, the filter 8 is a torpedo-shaped filter, which longitudinal axis is oriented vertically with the pointed tip up and adapted to allow the adsorbent granules to slide along the surface of the filter 8 and to get to a lower part of the block 1, hereto there are holes created in the sharp end surface of the filter 8 (e.g., by a drill or in case of casting - by means of a mould) having diameter, which is smaller than the diameter of the adsorbent granules. The filter 8 is adapted for uptaking of liquid from the adsorbent granules through the said holes and accumulating it inside the filter 8. In order to accumulate the liquid inside the filter 8, its bottom is not perforated (holed). The filter's 8 outlet or the reservoir 9 is connected with a pump 11 with the ability to pump the discharged liquid from the filter 8 to the liquid dispenser 5 or from the filter 8 to the reservoir 9, and then from the reservoir 9 to the liquid dispenser 5.

At the bottom the block 1 is provided with a means 12 for discharging the used adsorbent granules and their transportation to the adsorbent granules recovery block 2. Granules supply 4 and the means 12 may be the rotating sluice-gates for providing supply of adsorbent granules into and discharge from the block 1.

The block I may be provided with a steam condenser 13, the inlet of which is connected to pockets 14 created below the guiding funnel 10, but the exit - with the reservoir 9 or the liquid dispenser 5 with ability to direct the steam from the pockets 14 to the steam condenser 13, but from the condenser 13 - the condensate to the liquid dispenser 5 (optionally through the reservoir 9).

A heater 15, which is adapted for drying the adsorbent granules while not exceeding the water boiling temperature, is mounted below the inlet 7 level, at the bottom of the block 1. In this way the alcohol residues are being separated from the adsorbent granules surfaces, wherein the alcohol residues in a state of diluted alcohol vapour join the alcohol vapour to be dehydrated, being fed into the block 1. At the bottom part, the block 1 may be provided with a dispenser 16, which is adapted for feeding an overheated water vapour into the block 1.

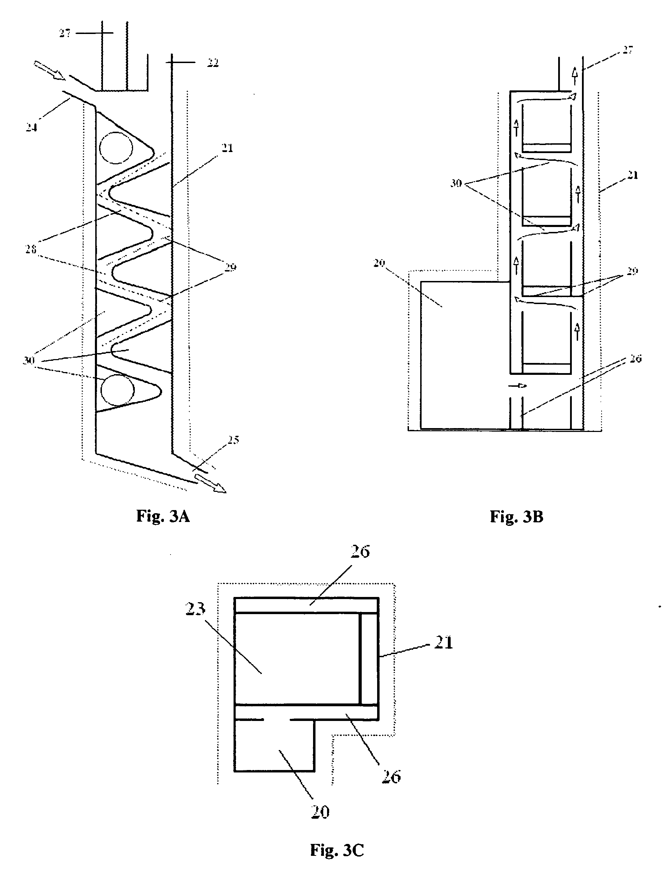

The block 2 may be designed as inductive, convective, radiation type and other type's device for drying adsorbent granules. According to one of the embodiments of the invention, the block 2 is designed as a double-wall chamber, adopted for moving adsorbent granules inside of it and hot fume gas - inside of the casing (Fig. 3A-3C). The block 2 comprises a furnace 20 and a double-wall chamber 21, which is connected to a steam outlet 22 at the top of the block 2, wherein the chamber 21 comprises:
- an internal chamber 23, which is adapted for moving the adsorbent granules through it and which has the moist granules inlet 24 at its upper part (the inlet 24 is connected with the means 12 of the block 1); at the bottom part the chamber 23 has the activated granules outlet 25 (which is with the adsorbent granules supply 4 in the block 1) and
- fume gas channels 26, which are connected with the furnace 20 and chimney 27 and are adapted for transferring heat to chamber 23, as well as for directing of fume gas from the furnace 20 to the chimney 27. There are slant granules movement channels 28 created in the chamber 23, which are adapted for gradual shifting of the adsorbent granules to the bottom of the block 2, preferably by trajectory similar to zigzag line. There are slant barrier walls 29 created in the fume gas channels 26, which direct gas flow through passages 30 to the opposite side of the chamber 23, by trajectory similar to zigzag line or spiral, thus heating the slant granules movement channels 28.

Further the proposed device's operation and implementation of the bioethanol dehydration method is explained.

The active adsorbent granules and alcohol vapour to be dehydrated are being fed into block I (Fig. 1B). The adsorbent granules can be made on zeolite base. The advantage of such adsorbent granules is their thermal resistance - about 500 °C (D. Brek, Ceolitovie molekularnie sita. - Moskva: Mir, 1976, 390 s.). That enables to use economic heat carriers, e.g., fume gases in the granule regeneration.

Absolute alcohol vapour and water bound (used) adsorbent granules, are being discharged from the block I and delivered to the adsorbent granules recovery block 2. The water bound to the adsorbent granules is being evaporated in the block 2 at high-temperature conditions. The resulting water steam is being used as a secondary heat carrier. The regenerated (active) adsorbent granules are being fed again to the rectification and adsorption block 1.

In order to explain technological processes in the block 1, Fig. 2 shows the embodiment of the block 1. By operating the rotary latch lock 4, the active water adsorbent granules are being fed to the granules moistening cylinder 3. In order to avoid separation of dust from the dry granules, which would make final product - bioethanol cloudy, here the granules are being splashed with high concentration of alcohol solution (intermediate product of the dehydration process ongoing in the block 1) through the liquid dispenser 5. An intensive binding of water to the adsorbent granules proceeds in the moistening cylinder 3, which results in releasing of heat. Due to that and also heat being brought to the cylinder 3 by hot granules coming from the block 2 and the hot liquid of intermediate product (from the filter 8), part of the liquid evaporates, and as an absolute alcohol vapour, through the cylinder 3 open bottom end joins the steam which flows from the block 1 to the final product vapour outlet 6. Thus, the active adsorbent granules moistening not only prevents possible bioethanol becoming cloudy, but also streamlines the dehydration process as the intermediate product is being led to the final product condition in an accelerated mode.

At the top of the block 1 in the alcohol over-azeotropic concentration conditions only the water adsorption occurs. The adsorbent granules are being splashed in the moistening cylinder 3 so much that the liquid there, as well as at the top of the block 1 is in surplus and freely flows down from the granules. The alcohol concentration in the downwards flowing liquid ever decreases due to its interaction with the upwards flowing, lower concentration alcohol vapour, and, at the definite block's 1 (column's) height, the azeotropic alcohol concentration is reached. The filter 8 is placed above this boundary level in the block 1. The guiding funnel 10 directs the downwards moving granules and liquid mass to the pointed end of the torpedo-shaped filter 8. Due to weight of the adsorbent granules placed above and due to own weight of granules, major part of liquid is being separated from the adsorbent granules and passed through the holes of the filter 8, but the granules are sliding along the surface of the filter 8 and get into the lower cross-section of the block I where the alcohol concentration is lower than the azeotropic, wherein the rectification process is already possible and can occur. The liquid drained through the holes flows and is being collected inside the filter- 8, from where, by means of a pump 11, this liquid is again being directed to the granules moistening cylinder 3. Since part of the liquid evaporates there, to ensure sufficient liquid for wetting of granules, it is being supplemented with the condensate, which is obtained from the steam being collected in the pocket 14 below the guiding funnel 10. The steam condenser 13 serves for obtaining of the condensate. Before pumping, both liquids can be collected in the reservoir 9.

Below the boundary level of azeotropic concentration both water adsorption and rectification processes proceed simultaneously. Besides, the adsorption significantly helps to overcome the inefficient rectification stage of the alcohol concentration ranging from 94 to 97% vol., when concentration increase in the rectification process is small (V.N. Stabnikov. Peregonka i rektifikacija spirta. Izd.2. 1969, s. 456, tab. 1-10). At the lower levels of granules layer, where alcohol concentration is decreasing, the efficiency of the rectification is ever increasing.

The rectification ensuring heat and mass transfer between the liquid and vapour phase in the block 1 is occurring just like in the filling-type rectification columns (V.N. Stabnikov. Peregonka i rektifikacija spirta. Izd.2. 1969, s.456) - on the surface of downwards pouring adsorbent granules, and taking place in the whole layer of adsorbent granules below the azeotropic concentration boundary level. This process is being divided into two parts by the alcohol to be dehydrated vapour inlet 7. The alcohol to be dehydrated is being supplied from the mash distillation column (not shown in figures) and overheated in the heater. The overheated alcohol vapour is drying the adsorbent granules and their physical condition, while pouring downwards is being changed from wet to moist. As a result of rectification, increase of the alcohol concentration occurs in zone above the dehydrate alcohol vapour inlet, but below it - the release of granules from the alcohol residues. An alcohol vapour concentration is gradually changing in the block 1 from 0% (at the very bottom) to 100% (uppermost). Thus, between these extremes in various cross-sections vapour of different concentration is present. The higher the cross-section is, the higher concentration is. If the block is being feed with, for example, 80% alcohol vapour, the inlet 7 is should be connected to that cross section of the block 1, where there is 80% alcohol vapour concentration. If the block is being fed with, for example, 70% mash distillate vapour, the inlet 7 should be connected lower, if with 90% - higher.

Releasing of granules from the alcohol occurs in two stages. The first is granules drying by heating with the heater 15, not exceeding the water boiling temperature. Thus, mostly evaporates the granules surrounding thin layer of liquid, which has bound the alcohol molecules, but less - water, existing in the internal granular pores. Simultaneously with granules drying improves their pouring ability and they easily pass through the gaps of the heater 15. With the assistance of the heater 15 diluted alcohol vapour separated from the adsorbent granules is being added to the dehydrate alcohol vapour fed in the block 1. Part of the so formed vapour inevitably fills free space between the granules below the heater 15. To avoid loss of alcohol during granules discharged, a small amount of overheated water steam is being fed in through the distributor 16 at the bottom part of the block 1. In this way, firstly, a safety-cushion of water steam is being created for moving up the alcohol vapour, and, secondly, realization of rectification-concentration processes at low alcohol concentration conditions is being assisted.

The used granules are being discharged from the block 1 by the sluice gate 12. Intensity of the discharge is being determined also by granules pouring intensity in the block 1. Spent granules are being regenerated in the block 2 for their subsequent re-use.

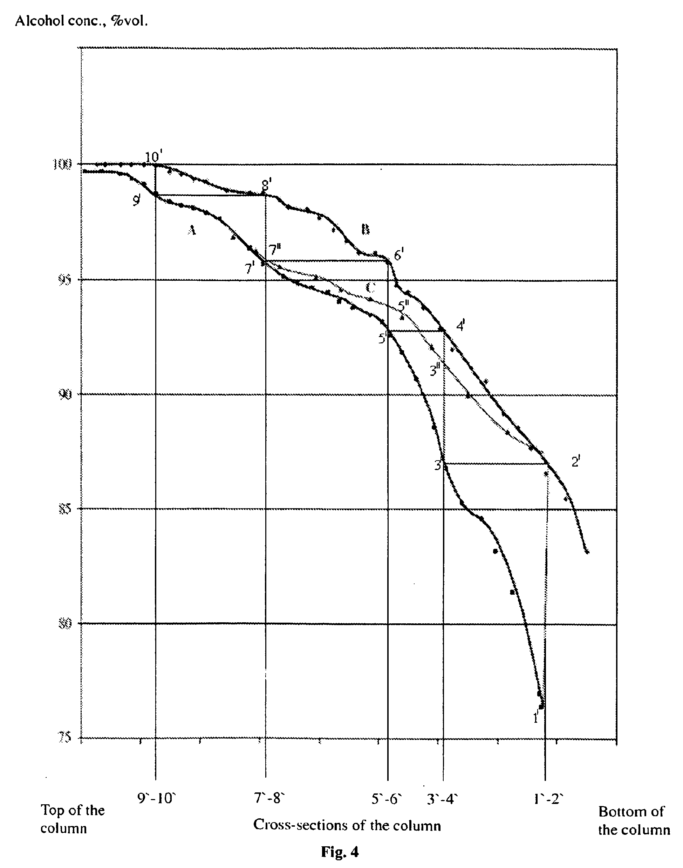

An example of realization of the principle of bioethanol semi-dry congruent dehydration, and demonstration of influence of each of the two water separation processes on the overall alcohol concentration increase at various cross-sections of the block 1, is shown in Fig. 4. The diagram is designed on the grounds of the inventors' experimentally defined relationship between the boiling alcohol liquid concentration and the resulting vapour concentration obtained in the presence of the water adsorbent, simulating the situation as it would occur with the downwards moving adsorbent granules in the filled block I at different height cross-sections. By marking the boiling alcohol concentration at a certain cross-section of the block 1 on the curve A, point on the curve B connected by vertical shows the alcohol vapour concentration, which is isolated from this solution. By downwards moving of adsorbent in the block 1 and constant interaction with the diluted alcohol vapour, adsorbent gradually becomes saturated with water and at certain block's I height cross-section is losing the water adsorption capacity. If above this cross-section both: water adsorption and rectification could occur, then below this cross-section only the alcohol rectification process occurs.

Curve C is being drawn using the alcohol solution-vapour equilibrium data from the table (V.N. Stabnikov. Peregonka i rektifikacija spirta. Izd.2., 1969, s. 456 tab. 1-10), and in theory depicts relationship of both of these phases concentration only in the rectification process. When drawing vertical from the point on the curve A, which shows the boiling alcohol concentration in a certain cross-section of the block 1, to the curve C, the intersection will show what would be a concentration of vapour isolated from this solution, if water adsorption process would not occur.

In example shown in Fig.4 at the block's I cross-section 1'-2', where the boiling alcohol solution is in a concentration of ~ 77%, only the rectification process is being realized; from this solution the alcohol vapour in a concentration of ~ 87% is being isolated. At the cross-section 3'-4' both water separation processes already occur, and by increase of the alcohol concentration of both processes from 87% to 93%, about 5% are related to the rectification (3-'3"), and only 1% is due to the adsorption (3"-4'). In contrast, at the cross-section 7'-8', the influence of rectification is negligible and almost all of the alcohol concentration increase in the solution is due to occurring of water adsorption (7"-8'). At the over-azeotropic alcohol concentrations (above 97.2% vol), only the water adsorption occurs (e.g., at the cross-section 9'-10').

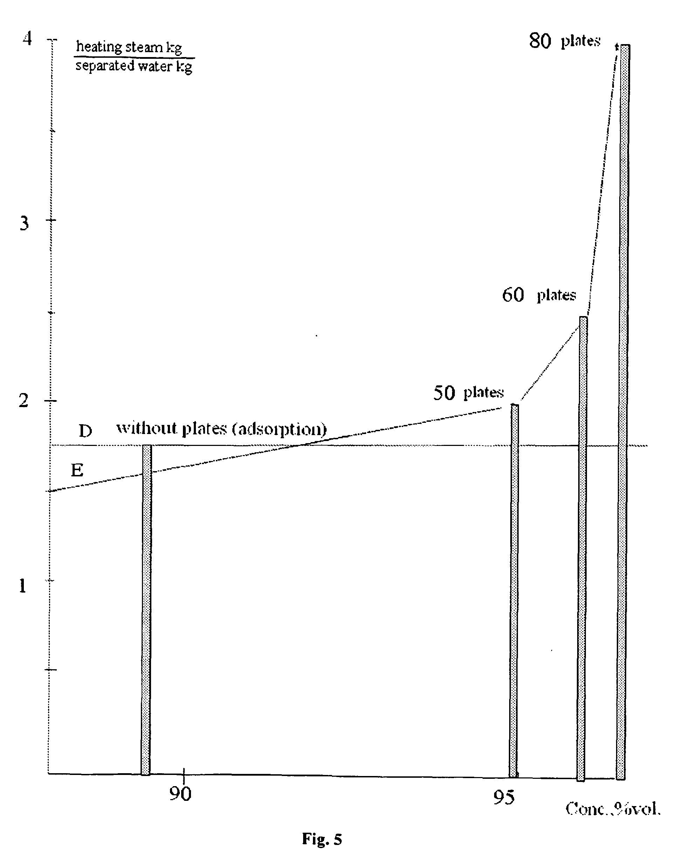

Water adsorption at dehydration of high concentration of alcohol, compared to the rectification, has advantages both from the energy consumption and equipment design simplification standpoints. Energy consumption at the water adsorption does not depend on the alcohol concentration; while approaching the azeotropic concentration in the rectification process, specific energy consumption is asymptotically approaching infinity and becomes infinite at the azeotropic concentration. This is shown in Fig. 5 - diagram made by inventors on the grounds of data from several professional literature sources, as well as from the data in Table 1 (V.N. Stabnikov. Peregonka i rektifikacija spirta. Izd.2., 1969, s. 456; V.A. Marincenko, P.S. Cigankov, V.N.Sve.c, S.P. Todosijcuk, A.N. Krivcun. Intensifikacija spirtovogo proizvodstva. - K.: Tehnika, 1983., 128 s).

**Table I**

| Comparison of rectification and adsorption | | |
|---|---|---|
| Alcohol concentration, % vol | Steam consumption per 1 kg of separated water | Number of plates |
| 88 | 1,5 | 30 |
| 95 | 2,0 | 50 |
| 96 | 2,5 | 60 |
| 96,5 | 4,0 | 80 |
| adsorption | 1,8 | without plates |

It follows from the Table 1 and Fig. 5 that in order to reduce specific energy consumption while performing combined, congruent dehydration of bioethanol in the concentration range of alcohol up to about 90% vol., the rectification process must prevail, but above it - the water adsorption.

It can be also seen from Fig. 5, that for removal of 1 kg of water for production of 96.5% alcohol by rectification, the energy is consumed 4.0:1.8=2.2 times or by (2.2:4.0)x 100=55% more then compared to adsorption. The energy saved by omitting water recirculation used in the conventional bioethanol technology, shall be added (Fig. 1A and Fig. 1B depict comparison of the processes), because about 15% of all water separated in block Y is being returned back to the block X while regenerating the molecular sieves and should be separated once again. The energy is also saved when regeneration of adsorbent granules spent during congruent dehydration of bioethanol is being performed by the heat of fume gas (10% at the expense of the steam boiler efficiency coefficient). The total energy saving in the bioethanol production technology dehydration unit then is 55+15+10 =80%.

It is known from the alcohol dehydration practice that to achieve high alcohol concentrations (96 to 96.5%) by a conventional rectification, the column must have 60 to 80 enhancement plates, that requires high height of the equipment (Spravocnik po proizvodstvu spirta. Oborudovanije, sredstva mehanizacii i avtomatizacii. - Moskva: legkaja i piscevaja prom, 1983, 480 s.). Applying the proposed method for the bioethanol dehydration, plates are not necessary, and the column (block 1) height is less, as the concentration increase in it occurs more efficiently when compared to the conventional rectification column (refer to Fig. 4). In the diagram depicted in Fig. 4 the drawn number of steps within the alcohol concentrations ranging from 77 to 100% - five, is a theoretical number of reinforcement stages. Assuming the efficiency coefficient of 0.5, in practice it would correspond to 10 plates in the column.

The second phase of proposed method is regeneration of spent granules in the block 2. By burning fuel in the furnace 20 fume gases are formed, which enter in the fume gas channel 26. Fume gas channels 26 are on both sides of the internal granule movement chamber 23. There are slant barrier walls 29 created in the fume gas channels 26 of both sides, which direct the gas flow through the passages 30 to the opposite side of the chamber 23, preferably in a zig-zag or spiral trajectory motion, thus, heating the slant granules movement channels 28 and achieving a longer path for movement of fume gas, more fully exploiting its heat potential. Moist granules enter the slant channels 28 through the inlet 24. Cooled down fume gases are being discharged through the chimney 27, but water steam separated from the granules is being removed through the outlet 22. The compressed water steam powered injector serves for removal, and then both vapour mixtures can be used for heating of mash distillation column.

Introduction the proposed semi-dry congruent bioethanol dehydration method in the production technology provides such advantages as the energy savings up to 80%, performance of continuous process, the simplified dehydration technology and construction of the equipment, safer conditions for regeneration of the adsorbent by separating non-flammable substance - water from the granules.

## Claims

1. A method for bioethanol dehydration comprising the following steps:
(i) fermented mash distillate rectification and simultaneous water adsorption, which occurs in the pouring or downwards moving moist adsorbent layer by feeding stream of fermented mash distillate vapour and stream of adsorbent into a rectification and adsorption block (1),
(ii) discharge of the spent adsorbent from the block (1) and the regeneration of the adsorbent in a recovery block (2) for its re-use in dehydration of bioethanol, **characterized in that** an activated granular adsorbent is being used as the adsorbent, which when being fed at the top of the rectification and adsorption block (1), is being moistened with an over-azeotropic concentration of the dehydration process' intermediate product's alcohol solution and afterwards the interaction of the moistened adsorbent with the fermented mash distillate vapour flow being fed at the middle part of the block (1), is being ensured, wherein the bound water is being separated from the spent adsorbent granules by evaporation at the granules recovery block (2).

2. The method according to claim 1, **characterized in that** dehydration process' intermediate product - an over-azeotropic concentration alcohol solution required for moistening the adsorbent granules, is being discharged from the zone of the rectification and adsorption block (1), where the intermediate liquid alcohol concentration is ranging from 97.5 to 98.5% vol., by filtering the intermediate liquid from the wet adsorbent granules.

3. The method according to claim 1 or 2, **characterized in that** part of vapour flowing inside, at the middle of the rectification and adsorption block (1), is being discharged, condensed and directed to supplement the volume of over-azeotropic alcohol concentration solution meant for moistening the adsorbent granules.

4. The method according to any of claims 1-3, **characterized in that** separation of alcohol residues from the spent adsorbent granules is being performed by feeding in the overheated water steam at the bottom of the rectification and adsorption block (1).

5. The method according to any of claims 1-4, **characterized in that** the adsorbent granules regenerated at the recovery block (2) are being continuously fed into the bioethanol rectification and adsorption block (1).

6. A device for implementation of the method for bioethanol dehydration set forth in the preceding claims, comprising: a rectification and adsorption block (1) and adsorbent granules recovery block (2), being adapted for drying adsorbent granules being discharged from the block (1) and directing them to the block (1) for re-use, wherein the rectification and adsorption block (1) is a rectification column without plates, which at the top contains an adsorbent granules moistening cylinder (3) having an open bottom part; the cylinder (3) at the top is connected to an active adsorbent granules supply (4) with ability to feed the adsorbent granules into the block (1) and is being provided with a liquid dispenser (5), which is adapted for splashing the adsorbent granules being fed into the cylinder (3) by an alcohol solution; at the top the block (1) is provided with an outlet (6) for discharging of absolute alcohol vapour from it, but at the middle part of the block (1) an inlet (7) for supplying of alcohol to be dehydrated, is connected, the said inlet (7) is being adapted for feeding the vapour of alcohol to be dehydrated into the block (1); above the level, where azeotropic concentration of alcohol is occurring in the block (I), a filter (8) is being mounted, which is adopted for separation of the surplus liquid from the adsorbent granules; the filter's (8) outlet is being connected to a liquid dispenser (5), optionally through a reservoir (9), which is connected to the liquid dispenser (5), with ability to direct the liquid discharged from the filter (8) to the liquid dispenser (5); at the bottom the block (1) is being provided with a means (12) for discharging of water bound adsorbent granules and their delivery to the adsorbent granules recovery block (2).

7. The device according to claim 6, **characterized in that** a guiding funnel (10) adapted for guiding of the adsorbent granules and liquid mass to the top of the filter (8), is being mounted above the filter (8) in the block (1).

8. The device according to claim 6 or 7, **characterized in that** the filter's (8) outlet or the reservoir (9) is being connected to a pump (11) with ability to pump the discharged liquid from the filter (8) to the liquid dispenser (5), or from the filter (8) to the reservoir (9) and then from the reservoir (9) to the liquid dispenser (5).

9. The device according to any of claims 6-8, **characterized in that** the block (1) is being provided with a steam condenser (13), the inlet of which is being connected to pockets (14) created below the guiding funnel (10), but the outlet - with the reservoir (9) or the liquid dispenser (5) with the ability to direct the steam from the pockets ( 14) to the condenser (13), but from the condenser (13) - condensate to the liquid dispenser (5), optionally through the reservoir (9).

10. The device according to any of claims 6-9, **characterized in that** at the bottom end the block (1) is being provided with a dispenser (16), which is adapted for feeding an overheated water steam into the block (1).

11. The device according to any of claims 6-10, **characterized in that** the filter (8) is a torpedo-shaped filter, which longitudinal axis is oriented vertically with the pointed tip up and adapted to allow the adsorbent granules to slide along the surface of the filter (8) and to get to the lowest part of the block (1), hereto there are holes created in the sharp end surface of the filter (8), having a diameter, which is smaller than the diameter of the adsorbent granules, the filter (8) is adapted for receiving liquid from the adsorbent granules through the said holes and accumulating it inside the filter (8).

12. The device according to any of claims 6-11, **characterized in that** a heater (15) is installed below the inlet (7) at the bottom of the block (1), the heater (15) being adapted for drying the adsorbent granules while not exceeding the water boiling temperature, and ensuring addition of diluted alcohol vapour separated from the adsorbent granules to alcohol vapour to be dehydrated, being fed into the block (1).

13. The device according to any of claims 6-12, **characterized in that** the block (2) comprises a furnace (20) and a double wall chamber (21), which is connected to the water steam outlet (22) at the top of the block (2) and comprises:
- an internal granules transfer chamber (23) having a moist granules inlet (24) and activated granules outlet (25) and
- fume gas channels (26), being connected with a furnace (20) and a chimney (27) and adapted for transferring the heat to the chamber (23), as well as for directing of fume gas from the furnace (20) to the chimney (27); wherein the chamber (23) is adapted for moving the adsorbent granules through it, and its inlet (24) is being connected with means (12) of the block (1), while the outlet (25) - with the adsorbent granules supply (4).

14. The device according to any of claims 6-13, **characterized in that** the chamber (23) is being provided with slant granules moving channels (28), which are adapted for gradual movement of the adsorbent granules to the bottom of the block (2), preferably by zigzag similar trajectory, but the fume gas channels (26) are being provided with barrier walls (29), which are adapted for directing gas flow through passages (30) to the opposite side of the chamber (23), preferably by a zigzag or spiral trajectory, thus ensuring heating of the slant granules movement channels (28).

15. The device according to any of claims 6-14, **characterized in that** the granules supply (4) and/or means (12) are being provided with a sluice gate, preferably with a rotary-type sluice gate for providing the adsorbent granules inlet to and discharge from the block (1).

## Patentansprüche

1. Ein Verfahren zur Trocknung von Bioethanol, das folgende Schritte umfasst:
(i) Die Rektifikation von vergorenem Maischedestillat und gleichzeitige Wasseradsorption, die in einer strömenden oder sich nach unten bewegenden feuchten Adsorptionsschicht stattfindet, wenn Dampf aus vergorenem Maischedestillat und ein Adsorberstrom in einen Rektifikations- und Adsorptionsblock eingeleitet werden (1),
(ii) die Ausleitung des verbrauchten Adsorbens aus dem Block (1) und die Regeneration des Adsorbens in einem Aufbereitungsblock (2) zur Wiederverwendung bei der Trocknung von Bioethanol ist **dadurch gekennzeichnet, dass** ein Aktivkohlegranulat als Adsorbens verwendet wird, das, wenn es an der Oberseite eines Rektifikations- und Adsorptionsblock (1) zugeführt wird, mit einer über-azeotropen Konzentration des im Trocknungsprozess gewonnenen Zwischenprodukts der Alkohollösung befeuchtet wird und anschließend die Interaktion des mit dem Dampfstrom des vergorenen Maischedestillats befeuchteten Adsorbens, welches im mittleren Teil des Blocks (1) zugeführt wird, erfolgt, wobei das gebundene Wasser aus dem verbrauchten Adsorbergranulat durch Verdampfen im Granulat-Rückgewinnungsblock entfernt wird.

2. Die Methode gemäß Anspruch 1 ist **dadurch gekennzeichnet, dass** das Zwischenprodukt des Trocknungsverfahrens - eine über-azeotrope Konzentration einer Alkohollösung, die für die Befeuchtung des Adsorbergranulats erforderlich ist, aus dem Bereich des Rektifikations- und Adsorptionsblocks (1) entnommen wird, wobei die Konzentration der Alkoholzwischenlösung durch Filterung der Zwischenflüssigkeit aus dem nassen Adsorbergranulat zwischen 97,5 und 98,5 % vol liegt.

3. Das Verfahren gemäß Anspruch 1 oder 2 ist **dadurch gekennzeichnet, dass** ein Teil des innen strömenden Dampfes in der Mitte des Rektifikations- und Adsorptionsblockes (1) entnommen, kondensiert und verwendet wird, um das Volumen der über-azeotropen Alkoholkonzentrationslösung, die für die Befeuchtung des Adsorbergranulats dient, zu erhöhen.

4. Das Verfahren gemäß den Ansprüchen 1 - 3 ist **dadurch gekennzeichnet, dass** die Trennung der Alkoholreste vom verbrauchten Adsorbergranulat erfolgt, indem erhitzter Wasserdampf am Boden des Rektifikations- und Adsorberblocks (1) eingeleitet wird.

5. Das Verfahren gemäß den Ansprüchen 1 - 4 ist **dadurch gekennzeichnet, dass** das im Aufbereitungsblock (2) regenerierte Adsorbergranulat kontinuierlich in den Rektifikations-und Adsorptionsblock (1) für Bioethanol eingeleitet wird.

6. Das Gerät zur Übernahme des Verfahrens der Bioethanol-Trocknung, wie in den vorhergehenden Ansprüchen dargestellt, besteht aus: einem Rektifikations- und Adsorptionsblock (1) und einem Adsorbergranulat-Aufbereitungsblock (2), die beide adaptiert wurden, um Adsorbergranulat, das dem Block (1) entnommen wurde, zu trocknen und in den Block (1) zur Wiederverwendung einzuleiten, wobei der Rektifikations- und Adsorptionsblock (1) aus einer Rektifikationssäule ohne Platten besteht, der/die oben mit einem Adsorbergranulat-Befeuchtungszylinder (3) ausgerüstet und mit einem offenen Boden ausgestattet ist; der Zylinder (3) oben ist an die Versorgung mit Aktivadsorbergranulat (4) angeschlossen, welche den Block (1) mit Adsorbergranulat versorgt und mit einem Flüssigkeitsspender (5) ausgestattet ist, der so ausgelegt ist, dass das Adsorbergranulat, welches in den Zylinder (3) eingeleitet wird mit einer Alkohollösung besprüht werden kann; an der Oberseite des Blocks (1) befindet sich ein Auslass (6), um den Absolutalkoholdampf zu entleeren; im mittleren Blockteil (1) befindet sich jedoch ein Einlass (7), um den zu trocknenden Alkohol zuzuführen; der genannte Einlass (7) ist so ausgelegt, um den zu trocknenden Alkoholdampf in den Block (1) einzuleiten; oberhalb des Niveaus, auf dem die azeotrope Alkoholkonzentration im Block (1) auftritt, ist ein Filter (8) montiert, über den die überschüssige Flüssigkeit vom Adsorbergranulat getrennt wird; der Filterauslass (8) ist an einen Flüssigkeitsspender (5), optional an einen Behälter (9) angeschlossen, der mit dem Flüssigkeitsspender (5) verbunden ist, um die aus dem Filter (8) austretende Flüssigkeit zum Flüssigkeitsspender (5) zu leiten; der Block (1) verfügt am Boden über ein Element (12), über das das wassergebundene Adsorbergranulat entleert und in den Adsorbergranulat-Aufbereitungsblock (2) geleitet wird.

7. Das Gerät gemäß Anspruch 6 ist **dadurch gekennzeichnet, dass** es einen Führungstrichter (10) enthält, der das Adsorbergranulat und die Flüssigkeitsmenge zur Oberseite des Filters (8) leitet und oben auf dem Filter (8) in Block (1) montiert ist.

8. Das Gerät gemäß Anspruch 6 oder 7 ist **dadurch gekennzeichnet, dass** der Filterauslass (8) oder der Behälter (9) an eine Pumpe (11) angeschlossen sind, um die Flüssigkeit aus Filter (8) zum Flüssigkeitsspender (5), oder vom Filter (8) zum Behälter (9) und dann vom Behälter (9) zum Flüssigkeitsspender (5) zu pumpen.

9. Das Gerät gemäß den Ansprüchen 6 - 8 ist **dadurch gekennzeichnet, dass** der Block (1) mit einem Dampfkondensator (13) versehen ist, dessen Einlass an die Taschen (14), die sich unter dem Führungstrichter (10) befinden, angeschlossen wird, jedoch der Auslass - mit dem Behälter (9) oder dem Flüssigkeitsspender (5), über den der Dampf von den Taschen (14) zum Kondensator (13), jedoch das Kondensat vom Kondensator (13) zum Flüssigkeitsspender (5) geleitet wird, optional an den Behälter (9) angeschlossen wird.

10. Das Gerät gemäß den Ansprüchen 6 - 9 ist **dadurch gekennzeichnet, dass** sich am Boden des Blocks (1) ein Spender (16) befindet, der erhitzten Wasserdampf in den Block (1) leitet.

11. Das Gerät gemäß den Ansprüchen 6-10 ist **dadurch gekennzeichnet, dass** es sich bei dem Filter (8) um einen torpedoförmigen Filter handelt, dessen Längsachse vertikal ausgerichtet ist und die Spitze nach oben zeigt und dieser so angebracht wird, dass das Adsorbergranulat über die Filterfläche (8) streichen und zum niedrigsten Punkt des Blocks (1) gelangen kann. Zu diesem Zweck befinden sich Löcher an der scharfen Stirnfläche des Filters (8), deren Durchmesser kleiner ist als der Durchmesser des Adsorbergranulats, wobei der Filter dazu dient, über die genannten Löcher die Flüssigkeit des Absorbergranulats aufzunehmen und die Flüssigkeit im Filter (8) zu sammeln.

12. Das Gerät gemäß den Ansprüchen 6 - 11 ist **dadurch gekennzeichnet, dass** ein Heizgerät (15) unter dem Einlass (7) am Boden des Blocks (1) installiert ist und das Heizgerät (15) zum Trocken des Adsorbergranulats mit einer die Siedewassertemperatur nicht übersteigenden Temperatur verwendet wird, wobei darauf zu achten ist, dass verdünnter Alkoholdampf, der aus dem Adsorbergranulat ausgeschieden wurde und zu Alkoholdampf getrocknet wird, in den Block (1) zugegeben werden muss.

13. Das Gerät gemäß den Ansprüchen 6 - 12 ist **dadurch gekennzeichnet, dass** der Block (2) mit einem Ofen (20) und einer doppelwandigen Kammer (21) ausgestattet ist, die mit dem Wasserdampfauslass (22) an der Oberseite des Blocks (2) verbunden wird und aus folgenden Teilen besteht:
- einer internen Granulattransferkammer (23) mit einem Feuchtgranulateinlass (24) und einem Aktivgranulatauslass (25) und
- Rauchgaskanälen (26), die an einen Ofen (20) und einen Kamin (27) angeschlossen und so ausgelegt sind, dass sie die Wärme in die Kammer (23) transportieren und ebenfalls das Rauchgas aus dem Ofen (20) in den Kamin (27) leiten; wobei die Kammer (23) so ausgelegt ist, dass sich das Adsorbergranulat in der Kammer bewegt und der Einlass (24) der Kammer an die Elemente (12) des Blocks (1), jedoch der Auslass (25) an die Adsorbergranulat-Versorgung angeschlossen ist.

14. Das Gerät gemäß den Ansprüchen 6 - 13 ist **dadurch gekennzeichnet, dass** die Kammer (23) mit Schrägförderkanälen (28) ausgestattet ist, so dass das Granulat in einer graduell verlaufenden Bewegung, vorzugsweise in einer Zickzack-Bewegung, zum Boden des Blocks (2) gelangt, die Rauchgaskanäle (26) jedoch mit Trennwänden (29) versehen sind, um den Gasfluss durch Passagen (30) zur gegenüber liegenden Seite der Kammer (23), vorzugsweise in einer Zickzack- oder spiralförmigen Bewegung zu ermöglichen und somit die Erwärmung der Schrägförderkanäle des Granulats (28) gewährleisten.

15. Das Gerät gemäß den Ansprüchen 6-14 ist **dadurch gekennzeichnet, dass** die Granulatversorgung (4) und/oder die Elemente (12) mit einer Schleuse, vorzugweise mit einer Drehschleuse für den Adsorbergranulat-Eingang und die Entleerung aus dem Block (1) ausgerüstet sind.

## Revendications

1. Procédé de déshydratation du bioéthanol comprenant les étapes suivantes:
(i) la rectification du distillat du moût fermenté et l'adsorption d'eau simultanée, qui se produit dans la couche adsorbant l'humidité à versement ou à déplacement vers le bas en délivrant le flux de vapeur de distillat du moût fermenté et le flux d'adsorbant dans un bloc de rectification et d'adsorption (1), (ii) l'évacuation de l'adsorbant utilisé à partir du bloc (1) et la régénération de l'adsorbant dans un bloc de récupération (2) pour sa réutilisation dans la déshydratation du bioéthanol, **caractérisé en ce qu'**un adsorbant granulaire activé est utilisé comme adsorbant qui, lorsqu'il est délivré dans la partie supérieure du bloc de rectification et d'adsorption (1), est humidifié avec une concentration sur-azéotrope de la solution alcoolique du produit intermédiaire du processus de déshydratation et, par la suite, l'interaction de l'adsorbant humidifié avec le flux de vapeur de distillat du moût fermenté délivré au niveau de la partie médiane du bloc (1), est assurée, dans lequel l'eau liée est séparée des granulés adsorbants utilisés par évaporation au niveau du bloc de récupération des granulés (2).

2. Procédé selon la revendication 1, **caractérisé en ce que** le produit intermédiaire du processus de déshydratation (une solution alcoolique de concentration sur-azéotrope nécessaire pour humidifier les granulés adsorbants) est évacué à partir de la zone du bloc de rectification et d'adsorption (1), où la concentration en alcool du liquide intermédiaire est comprise entre 97,5 et 98,5 % en volume, en filtrant le liquide intermédiaire provenant des granulés adsorbants humides.

3. Procédé selon la revendication 1 ou 2, **caractérisé en ce qu'**une partie de la vapeur circulant à l'intérieur, au milieu du bloc de rectification et d'adsorption (1), est évacuée, condensée et dirigée pour compléter le volume de la solution à concentration alcoolique sur-azéotrope destinée à humidifiée les granulés adsorbants.

4. Procédé selon l'une quelconque des revendications 1 à 3, **caractérisé en ce qu'**une séparation des résidus d'alcool à partir des granulés adsorbants utilisés est réalisée par introduction dans la vapeur d'eau surchauffée dans la partie inférieure du bloc de rectification et d'adsorption (1).

5. Procédé selon l'une quelconque des revendications 1 à 4, **caractérisé en ce que** les granulés adsorbants régénérés au niveau du bloc de récupération (2) sont délivrés de manière continue dans le bloc de rectification et d'adsorption (1) du bioéthanol.

6. Dispositif pour mettre en oeuvre le procédé de déshydratation du bioéthanol énoncé dans les revendications précédentes, comprenant : un bloc de rectification et d'adsorption (1) et un bloc de récupération des granulés adsorbants (2), étant conçu pour sécher des granulés adsorbants évacués à partir du bloc (1) et les diriger vers le bloc (1) pour être réutilisés, dans lequel le bloc de rectification et d'adsorption (1) est une colonne de rectification sans plaques qui contient, dans la partie supérieure, un cylindre humidificateur des granulés adsorbants (3) présentant une partie inférieure ouverte ; le cylindre (3) dans la partie supérieure est relié à une alimentation de granulés adsorbants actifs (4) pouvant délivrer les granulés adsorbants dans le bloc (1) et est doté d'un distributeur de liquide (5), qui est conçu pour asperger les granulés adsorbants délivrés dans le cylindre (3) avec une solution alcoolique ; dans la partie supérieure, le bloc (1) est doté d'une sortie (6) pour évacuer la vapeur d'alcool absolu à partir de celle-ci, mais dans la partie médiane du bloc (1), une entrée (7) pour délivrer l'alcool à déshydrater est reliée, ladite entrée (7) étant conçue pour délivrer la vapeur d'alcool à déshydrater dans le bloc (1) ; au-dessus du niveau, où une concentration azéotrope d'alcool se produit dans le bloc (1), on installe un filtre (8) qui est conçu pour séparer le surplus de liquide des granulés adsorbants ; la sortie du filtre (8) est reliée à un distributeur de liquide (5), facultativement à travers un réservoir (9), qui est relié au distributeur de liquide (5), permettant de diriger le liquide évacué entre le filtre (8) et le distributeur de liquide (5) ; dans la partie inférieure, le bloc (1) est doté d'un moyen (12) pour évacuer les granulés adsorbants liés à l'eau et pour les délivrer au bloc de récupération des granulés adsorbants (2).

7. Dispositif selon la revendication 6, **caractérisé en ce qu'**un entonnoir de guidage (10) conçu pour guider les granulés adsorbants et la masse liquide vers la partie supérieure du filtre (8), est installé au-dessus du filtre (8) dans le bloc (1).

8. Dispositif selon la revendication 6 ou 7, **caractérisé en ce que** la sortie du filtre (8) ou le réservoir (9) est relié à une pompe (11) permettant de pomper le liquide évacué entre le filtre (8) et le distributeur de liquide (5), ou entre le filtre (8) et le réservoir (9) puis entre le réservoir (9) et le distributeur de liquide (5).

9. Dispositif selon l'une quelconque des revendications 6 à 8, **caractérisé en ce que** le bloc (1) est doté d'un condenseur de vapeur (13), dont l'entrée est reliée à des poches (14) prévues en dessous de l'entonnoir de guidage (10), mais dont la sortie est reliée au réservoir (9) ou au distributeur de liquide (5) permettant de diriger la vapeur entre les poches (14) et le condenseur (13), et entre le condensat du condenseur (13) et le distributeur de liquide (5), facultativement à travers le réservoir (9).

10. Dispositif selon l'une quelconque des revendications 6 à 9, **caractérisé en ce qu'**à l'extrémité inférieure, le bloc (1) est doté d'un distributeur (16), qui est conçu pour délivrer une vapeur d'eau surchauffée dans le bloc (1).

11. Dispositif selon l'une quelconque des revendications 6 à 10, **caractérisé en ce que** le filtre (8) est un filtre en forme de torpille, dont l'axe longitudinal est orienté verticalement avec la pointe dirigée vers le haut et conçu pour permettre aux granulés adsorbants de glisser le long de la surface du filtre (8) et de se diriger vers la partie inférieure du bloc (1), où se situent des orifices prévus dans la surface d'extrémité pointue du filtre (8), présentant un diamètre qui est inférieur au diamètre des granulés adsorbants, le filtre (8) est conçu pour recevoir le liquide provenant des granulés adsorbants à travers lesdits orifices et pour le recueillir à l'intérieur du filtre (8).

12. Dispositif selon l'une quelconque des revendications 6 à 11, **caractérisé en ce qu'**une chaudière (15) est installée en dessous de l'entrée (7) dans la partie inférieure du bloc (1), la chaudière (15) étant conçue pour sécher les granulés adsorbants sans dépasser la température d'ébullition de l'eau, et pour assurer l'ajout de vapeur d'alcool dilué séparée des granulés adsorbants dans la vapeur d'alcool à déshydrater, délivrée dans le bloc (1).

13. Dispositif selon l'une quelconque des revendications 6 à 12, **caractérisé en ce que** le bloc (2) comprend un four (20) et une chambre à double paroi (21), qui est reliée à la sortie de vapeur d'eau (22) dans la partie supérieure du bloc (2) et comprend :
- une chambre interne de transfert de granulés (23) présentant une entrée de granulés humides (24) et une sortie de granulés activés (25) et
- des canaux de gaz de fumée (26), reliés à un four (20) et à une cheminée (27) et conçus pour transférer la chaleur vers la chambre (23), ainsi que pour diriger les gaz de fumée à partir du four (20) vers la cheminée (27) ; dans lequel la chambre (23) est conçue pour déplacer les granulés adsorbants à travers celle-ci, et son entrée (24) est reliée au moyen (12) du bloc (1), alors que la sortie (25) est reliée à l'alimentation de granulés adsorbants (4).

14. Dispositif selon l'une quelconque des revendications 6 à 13, **caractérisé en ce que** la chambre (23) est dotée de canaux inclinés de déplacement des granulés (28), qui sont conçus pour le déplacement progressif des granulés adsorbants vers la partie inférieure du bloc (2), de préférence par une trajectoire similaire en zigzag, mais les canaux de gaz de fumée (26) sont dotés de parois barrières (29), qui sont conçues pour diriger le flux de gaz à travers des passages (30) vers le côté opposé de la chambre (23), de préférence par une trajectoire en zigzag ou en spirale, assurant ainsi le chauffage des canaux inclinés de déplacement des granulés (28).

15. Dispositif selon l'une quelconque des revendications 6 à 14, **caractérisé en ce que** l'alimentation de granulés (4) et/ou le moyen (12) est/sont doté(s) d'une vanne de vidange, de préférence avec une vanne de vidange rotative pour permettre l'entrée des granulés adsorbants dans le bloc (1) et leur évacuation à partir du bloc (1).
